# EUROPEAN PATENT SPECIFICATION

(11) **EP 4 462 727 B1**
(45) Date of publication and mention of the grant of the patent: **07.10.2026**
(21) Application number: 23461579.7
(22) Date of filing: 10.05.2023
(51) Int. Cl.: H04L 9/08, H04B 10/70

(54) **QUANTUM CONFERENCE KEY AGREEMENT PROTOCOL AND USE THEREOF IN A DISTRIBUTED SYSTEM**
QUANTENKONFERENZSCHLÜSSELVEREINBARUNGSPROTOKOLL UND VERWENDUNG DAVON IN EINEM VERTEILTEN SYSTEM
PROTOCOLE D'ACCORD DE CLÉ DE CONFÉRENCE QUANTIQUE ET SON UTILISATION DANS UN SYSTÈME DISTRIBUÉ

(43) Date of publication of application: 13.11.2024
(73) Proprietor: Quantum Blockchains Sp. z o.o., 20-502 Lublin (PL)
(72) Inventor: SOPEK, Miroslaw, 20-502 Lublin (PL); KOSIK, Miriam, 20-502 Lublin (PL); MISIASZEK-SCHREYNER, Marta, 20-502 Lublin (PL)
(74) Representative: Kancelaria Eupatent.pl Sp. z o.o.

(56) References cited:
- CN-A- 113 328 853
- MARTA MISIASZEK-SCHREYNER: "Applications of single-photon technology", ARXIV.ORG, CORNELL UNIVERSITY LIBRARY, 201 OLIN LIBRARY CORNELL UNIVERSITY ITHACA, NY 14853, 20 May 2022 (2022-05-20), XP091229604
- MARTA MISIASZEK-SCHREYNER ET AL: "Time-Bin CKA as a tool for blockchain technology", ARXIV.ORG, CORNELL UNIVERSITY LIBRARY, 201 OLIN LIBRARY CORNELL UNIVERSITY ITHACA, NY 14853, 30 August 2023 (2023-08-30), XP091601329
- MARCO MARCOZZI ET AL: "Quantum Consensus: an overview", ARXIV.ORG, CORNELL UNIVERSITY LIBRARY, 201 OLIN LIBRARY CORNELL UNIVERSITY ITHACA, NY 14853, 11 January 2021 (2021-01-11), XP081856888

## Description

### TECHNICAL FIELD

The present invention relates to methods and systems used for deploying a quantum conference key agreement protocol.

### BACKGROUND

### Key exchange

Communication systems often use key-agreement protocols, whereby two or more parties can agree on a key in such a way that both influence the outcome. Classical systems use a predetermined private-public pair of keys. Quantum cryptography systems are also based on key distribution, but the key is generated by a non-deterministic, purely random process. This process, which occurs in consistence with laws of quantum mechanics, secures the distribution of the key itself. For example, since quantum state collapses when measured, the eavesdropping of transmission can be easily detected. Also, due to no-cloning theorem, it is impossible to copy the data that is encoded in a quantum state. All of this makes quantum key distribution (QKD) an information-theoretically secure solution to the key exchange problem.

There are many protocols used for QKD. One of the best known is BB84, named after Charles Bennett and Gilles Brassard, presented in 1984. In this protocol, a secret key is encoded in photons' polarization states, randomly chosen from two available basis. Each photon represents a single bit of data. Its value is established after the transmission of a photon through the quantum channel and the measurement of its polarization state. Since the measurement is done in two basis, that are also randomly chosen, the outcome of the measurements need to be reconciled by communicating parties. It is done through classical channel (such as an e-mail or any other similar kind of Internet transfer). Unfortunately, due to that, in the worst case, half of sent bits may need to be removed from the key. Moreover, there are also other losses, decoherence and measurement imperfections that may influence the rate of established key.
Furthermore, standard QKD protocols such as BB84 presented above, require setting quantum channels between all communicating parties. It means that for N parties it is necessary to have [N*(N-1)]/2 connections.

A quantum Conference Key Agreement (CKA) is a QKD protocol that allows to decrease the number of connections in the system to N for N communicating parties. It was experimentally demonstrated for polarization encoded qubits in a scheme with 4 node network in 2021 in a publication "Experimental quantum conference key agreement" by M. Proietti, J. Ho, F. Grasselli, P. Barrow, M. Malik, A. Fedrizzi (Sci. Adv. 7, 23 (2021)). This protocol enables a multiparty quantum key exchange, because the same quantum key is established between many parties. The infrastructure that allows to achieve such consensus consists of two parts. One is a classical Internet cloud that connects all parties using classical communication in classical channels, and the other is a quantum server that is responsible for preparing and distributing shared qubits between all parties at once. The CKA is based on sharing N qubits with N communicating parties. These qubits are in a specific entangled state called |GHZ〉 which may be mathematically written as $\left|GHZ\right〉 = \frac{1}{\sqrt{2}} \left({\left|0\right〉}^{⊗ N}+{\left|1\right〉}^{⊗ N}\right) .$

### Consensus algorithms in distributed systems

A distributed system has components that are located on different networked computers, which communicate and coordinate their actions by passing messages to one another. A crucial feature of a distributed system, such as a blockchain, is a consensus, providing transparency and data security of the distributed system. In theoretical considerations of distributed systems there are two fundamental theorems that limit its desirable properties. One of them is known as a CAP theorem (Consistency, Availability, Partition tolerance), and the other is FLP impossibility result (developed by Fischer, Lynch and Paterson).

The CAP theorem states that any distributed system can have at most two of the following three properties:
- consistency (C) - every read receives the most recent write;
- availability (A) - each request eventually receive a response;
- partition tolerance (P) - the system operates despite an arbitrary number of messages being dropped between nodes due to communication breakdowns or any other reasons.

The FLP impossibility result comes from consideration on achieving consensus in distributed systems. It shows that in an asynchronous setting, there is no distributed algorithm that always solves the consensus problem, even if only one node of the system is fault.

The limits ensuing from both CAP and FLP theorems translate to the phenomenon called the blockchain trilemma: it is impossible for any classical blockchain to simultaneously guarantee security, scalability and decentralization. Various consensus algorithms attempted to find a balance between these three features, resembling the trade-offs made by the designers of standard distributed systems.

One of the approaches to minimize the negative effects of the trilemma is to prioritize data availability (i.e. scalability) and agree that the data may not be consistent on all nodes at the same time, but to demand that it is eventually consistent, i.e. after some time of the system life. There are various consensus mechanisms, mainly used in blockchain software, such as: Proof of Work (PoW), Proof of Stake (PoS), Delegated Proof of Stake (DPoS), Proof of Authority (PoA), Proof of Capacity (PoC) and many others. All of them are the mathematical operations through which nodes from the network validate creation of new blocks, however, they differ in the type of algorithm that is used. The most popular and most famous is PoW, despite the fact that it needs high computational effort that results in high energy consumption.

A publication "Applications of single-photon technology" (by Marta Misiaszek-Schreyner in Cornell University Library, XP091229604) discusses various applications of single-photon sources, including time-bin encoding as a method used for encryption of information in quantum communication.

### SUMMARY OF THE INVENTION

The objects of the present invention are achieved by means of the appended set of claims.

There is a need to provide improvements to solve at least some of the above-discussed problems related to key exchange protocols and consensus in distributed systems.

In accordance with one aspect of the invention, there is provided a variant of a conference key agreement (CKA) protocol that utilizes time-bin encoding (hereinafter called the TB CKA protocol). Such protocol is based on sharing time-bin GHZ states.

The proposed time-bin encoding is a method of encoding an information using photons traveling through paths of different lengths. As a result, photons' arrival time, compared to external clock, differ and may be assigned as the early-time-bin and late-time-bin.

In one aspect, the invention relates to a system for deploying a quantum conference key agreement protocol, comprising: a generator configured to generate a first beam of photons; a time-bin encoder configured to modify the beam of photons to obtain early-time-bin photons and late-time-bin photons forming a second beam of time bin photons; and a polarization qubit generator configured to transform the second beam of time-bin photons to time-bin GHZ qubits.

The time-bin encoder may comprise a dual optical path containing beamsplitters and mirrors that provide a short and long path.

The polarization qubit generator may comprise: a first spontaneous parametric down-conversion nonlinear crystal configured to form a third beam of hyperentangled qubits from the second beam of time bin photons; and a first polarization beamsplitter configured to divide the third beam into a fourth beam with a first polarization and a fifth beam with a second polarization orthogonal to the first polarization.

The system may further comprise a second spontaneous parametric down-conversion nonlinear crystal configured to form a sixth beam from the fourth beam and a seventh beam from the fifth beam wherein the fourth beam is passed through the spontaneous parametric down-conversion nonlinear crystal in an opposite direction with respect to the fifth beam; a second polarization beamsplitter configured to divide the sixth beam into an eighth beam with a first polarization and a ninth beam with a second polarization orthogonal to the first polarization; and a third polarization beamsplitter configured to divide the seventh beam into a tenth beam with a first polarization and an eleventh beam with a second polarization orthogonal to the first polarization.

In another aspect, the invention relates to a method for deploying a quantum conference key agreement protocol, comprising generating at least two beams of time-bin GHZ qubits by means of the system as described herein and receiving the beams by corresponding detectors.

The present invention offers the ability to share symmetric key between many communicating parties at once. Thanks to the use of time-bin encoding, it is possible to extend the range of communication, as compared to the polarization encoded qubits. Moreover, a stream of random bits shared using TB CKA protocol may be used in algorithms, enabling to achieve novel type of consensus in distributed systems, that overcome FLP impossibility result. Thanks to this, the crucial properties of a distributed system, such as consistency, security, availability, may be enhanced.

### BRIEF DESCRIPTION OF DRAWINGS

The present invention is shown by means of example embodiments on a drawing, wherein:
Fig. 1 shows a scheme of time-bin encoding;
Fig. 2 shows an embodiment of a time-bin GHZ state generator;
Fig. 3 shows a scheme of an example infrastructure with four nodes;
Fig. 4 shows a first embodiment of a time-bin GHZ state generator for use in a four-node network;
Fig. 5 shows a second embodiment of a time-bin GHZ state generator for use in a two-node network;
Fig. 6 shows a procedure for achieving a consensus in a distributed network, not forming part of the claimed invention.

### DETAILED DESCRIPTION

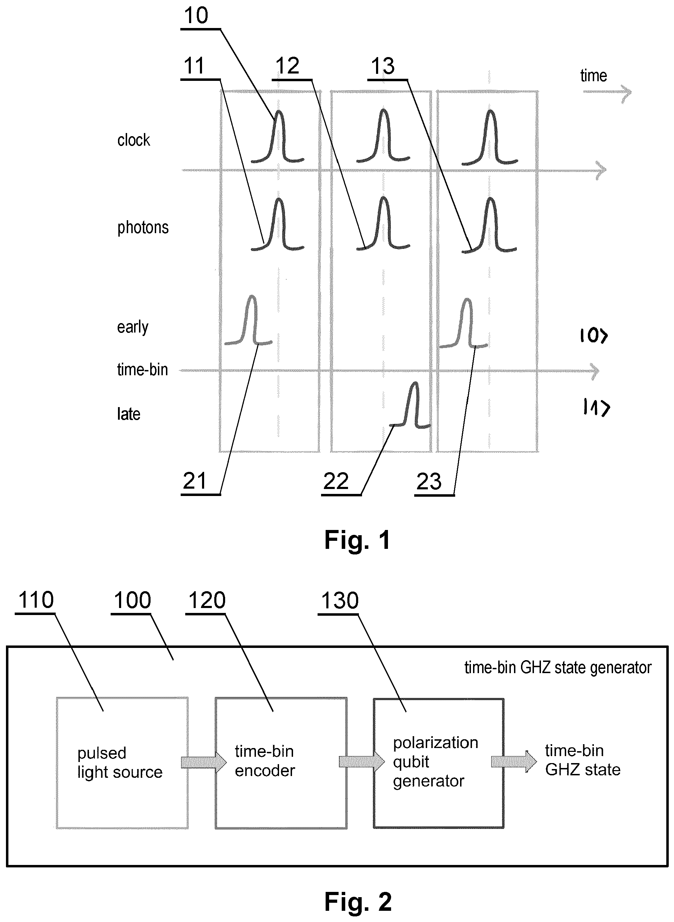

Fig. 1 shows a scheme of time-bin encoding on which the TB CKA protocol is based. A series of photons 11, 12, 13 is transmitted in accordance with a reference external clock 10 through paths of different lengths, such that photons 11 and 13 are transmitted via a shorter path than the photon 12. Consequently, the received photons 21 and 23 are slightly earlier than the reference external clock 10 (and therefore are called early-time-bin), while the received photon 22 is slightly later than the reference external clock (and therefore is called late-time-bin).

The concept presented in Fig. 1 is used for time-bin GHZ state generation by means of a generator 100 as shown in Fig. 2. The generator 100 comprises a pulsed light source configured to generate a beam of photons 11-13, a time-bin encoder 120 configured to modify the beam of photons such as to obtain early-time-bin photons 21, 23 and late-time-bin photons 22, and a polarization qubit generator 130 configured to transform the time-bin photons 21-23 to time-bin GHZ qubits that represent a time-bin GHZ state.

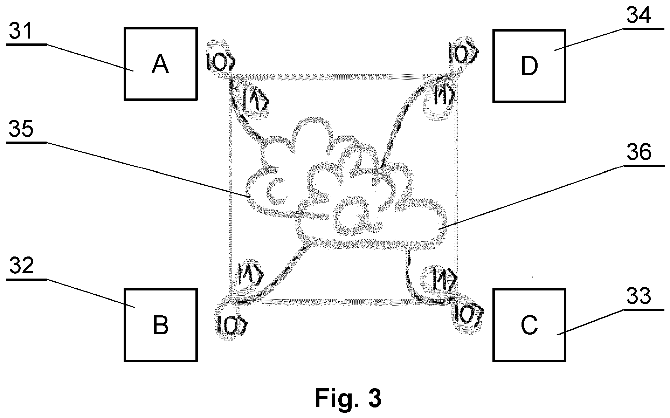

Depending on a type of qubit generator, time-bin GHZ state of various dimensions may be created and shared, influencing the number of nodes that share the same secret key. Such key can be used to achieve consensus between network nodes. The infrastructure that allows to achieve such consensus consists of two parts and is shown in an example with four nodes 31-34 in Fig. 3. One part 35 is a classical Internet cloud that connects all parties using classical communication in classical channels, the other is a quantum server 36 that is responsible for preparing and distributing shared qubits between all parties at once. The scheme of such infrastructure is presented in Fig. 3.

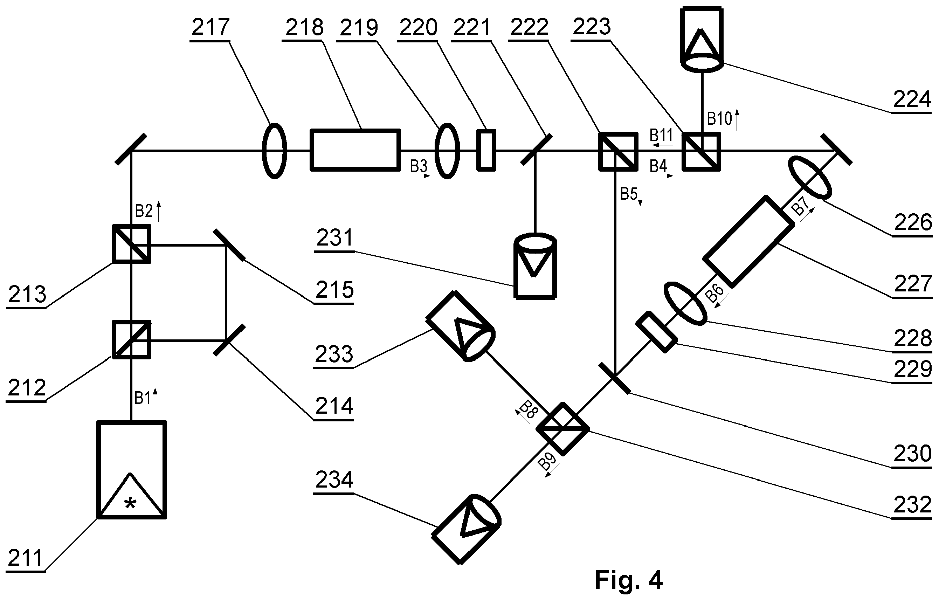

Fig. 4 shows a first embodiment of a system to implement the method described above, with a time-bin GHZ state generator for use in a four-node network to generate qubits in a time-bin GHZ state.

Beams B1-B11 are marked in the drawing at the point at which they originate, with an arrow indicating the direction of flow of the beam.

A first beam B1 of photons 11, 12, 13 is generated by a pulsed laser 211, such as a pump laser, (that functions as the generator 100) and enters a dual optical path containing beamsplitters 212, 213 and mirrors 214, 215 (that function as the time-bin encoder) that provide a short and long path, such that after passing through the dual optical path, a second beam B2 of time bin photons is created, that may be denoted as states |0〉 and |1〉.

The further components described below function as the polarization qubit generator 130. The second beam B2 is focused on a first spontaneous parametric down-conversion (SPDC) nonlinear crystal 218. The crystal 218 creates polarization qubits in a form $\left|ϕ\right〉 = \frac{1}{\sqrt{2}} \left(\left|↕\right〉+\left|↔\right〉\right) ,$ wherein |↕〉, |↔〉 are vertical and horizontal polarization states, respectively. Taking into account the time bin photons of the second beam, the crystal 218 forms a third beam B3 of hyperentangled qubits, which can be described as $\left|ϕ\right〉 = \frac{1}{\sqrt{2}} \left(\left|{0}_{↕}{0}_{↔}\right〉+\left|{1}_{↕}{1}_{↔}\right〉\right) .$

Next, the third beam B3 incidents onto a first polarization beamsplitter (PBS) 222, that divides the third beam into two beams: a fourth beam B4 (for example, with horizontal polarization (↔)) and a fifth beam B5 (with vertical polarization (↕)), that are used to build the Sagnac single-photon source (in which beams pass through the crystal in opposite directions simultaneously). Assuming that in this case the fourth beam B4 with horizontal polarization passes through a third PBS 223, this fourth beam B4 is focused into the second SPDC nonlinear crystal 227, wherein another pair of orthogonally polarized photons are generated, so the fourth beam B4 here is converted into a sixth beam B6 such that: $\left(\left|{0}_{↔}\right〉+\left|{1}_{↔}\right〉\right) \to \left(\left|{0}_{↕}{0}_{↔}\right〉+\left|{1}_{↕}{1}_{↔}\right〉\right) .$

Next, that sixth beam B6 passes through a half-wave plate 229 that rotates the polarization state of each photon, resulting in a similar state (|0_{↔}0_{↕}〉 + |1_{↔}1_{↕}〉). This sixth beam B6 of photons is then separated by a first dichroic mirror (DM) 230, passes through a second PBS 232, wherein it is divided into two beams: an eighth beam B8 (for example, with horizontal polarization (↔)) and a ninth beam B9 (with vertical polarization (↕)), wherein the beams B8, B9 are detected correspondingly in a first detector 233 and a second detector 234.

In the other arm, the fifth beam B5 with vertical polarization is reflected from the dichroic mirror 230 and passes through the half-wave plate 229 that changes its polarization to a horizontal polarization. Next, the second SPDC nonlinear crystal 227 converts the fifth beam B5 with changed polarization in the same manner as for the fourth beam B4, resulting in a state (|0_{↔}0_{↕}〉 + |1_{↔}1_{↕}〉) that forms the seventh beam B7. Next, the seventh beam B7 is divided in the fourth PBS 223 into two beams: a tenth beam B10 (for example, with horizontal polarization (↔)) and an eleventh beam B11 (with vertical polarization (↕)), wherein the beams B10, B11 are detected correspondingly in a third detector 224 and a fourth detector 231 (located after a dichronic mirror 221).

The lens 217, 219, 226, 228 are used for focusing the beams on the crystals 218, 227.

Finally, taking into account both conversion processes, the overall photon state before the measurement can be written as $\left|Ψ\right〉 = \frac{1}{\sqrt{2}} \left(\left|{0}_{↔}{0}_{↕}{0}_{↔}{0}_{↕}\right〉+\left|{1}_{↔}{1}_{↕}{1}_{↔}{1}_{↕}\right〉\right) .$

Such photon state shows a so-called hyperentanglement, where in correlation between photons various properties (degrees of freedom) are engaged.

Since single-photon detectors are not usually sensitive to the photon polarization state (they are more sensitive to photon wavelength), it may be concluded that in all detectors the same shared time-bin qubit is measured. Thanks to this it is possible to establish the key simultaneously with all four nodes.

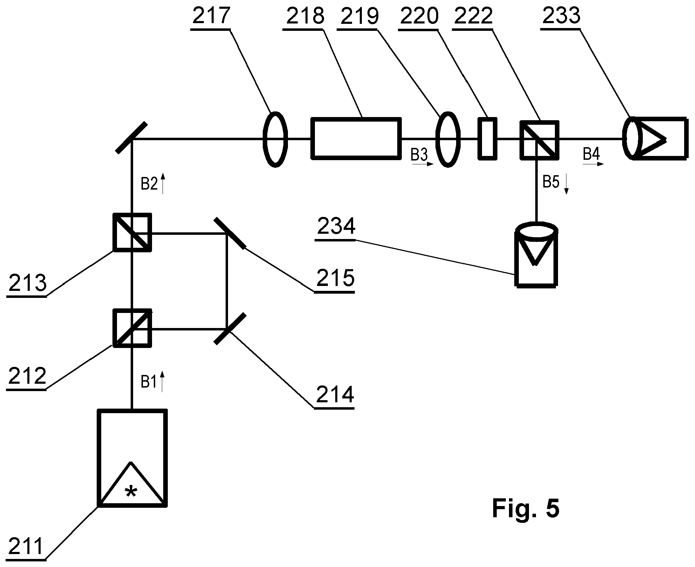

Fig. 5 shows a second embodiment of a time-bin GHZ state generator for use in a two-node network, which operates in a manner similar to the embodiment of Fig. 4, but is limited to a single polarization beamsplitter 222 that divides the third beam B3 into two beams: a fourth beam B4 (for example, with horizontal polarization (↔)) and a fifth beam B5 (with vertical polarization (↕)), which are detected in a first detector 233 and a second detector 234, respectively.

### Consensus protocol for distributed systems and reconciliation of databases

A GHZ state, which is the main tool used in the TB CKA protocol presented herein, enables to achieve distributed consensus, as follows from publications "Quantum Consensus: an overview" by M. Marcozzi, L. Mostarda (arXiv: 2101.04192 (2021)) and "The Computational Power of the W and GHZ states" by E. D'Hondt, P. Pamamgaden (Journ. Quantum Inf. and Comp. 6(2), 173 (2005)).

Each node in a network receives a single qubit and measures it, choosing "0" if measured state is |0〉 and "1" otherwise. Due to the entanglement of all the qubits, the single measurement causes collapse of qubit state to |0〉 or |1〉 for each participant of communication, not only for those who made the measurement. This creates a shared, identical (though random) bit, which in subsequent steps, enables multiple nodes to reach a consensus on a single bit of classical information.

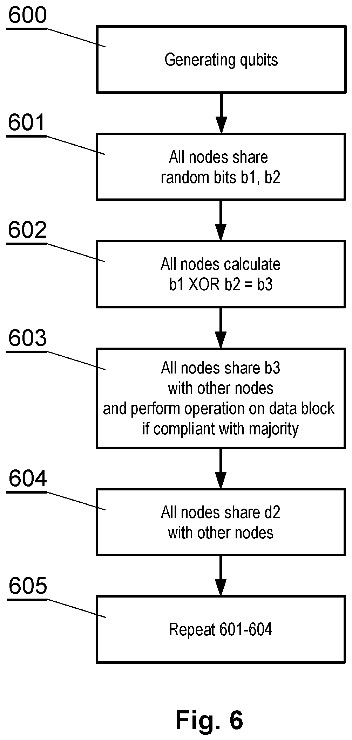

A scheme of a protocol that allows to obtain the consensus over the block of data in a distributed system shown in Fig. 3 is shown in Fig. 6.

In step 600, the quantum server 36 generates the qubits, for example as explained with reference to Fig. 4.

In step 601, the quantum server 36 communicates to all nodes 31-34 two bits, b1 and b2, which are the same and provided to each node 31-34 via a detector 224, 231, 233, 234 dedicated to that node. Therefore, the value of the bits b1, b2 received at each node 31-34 may be different and depends on the measurement results, depending on whether an early or late time bin has been received at that particular node.

In step 602, all nodes calculate a third bit b3 as a function of the two bits b1, b2, such as b3 = b1 XOR b2.

In step 603, all nodes share b3 with others and:
- nodes that calculated b3 to a value which is the same as the majority of values of b3 received from the other nodes, perform an operation on a data block d1 as a function of one of the two bits received in step 601, such as a XOR function, to obtain a processed data block d2, for example: b1 XOR d1 = d2 (or alternatively, b2 XOR d1 = d2);
- nodes that calculated b3 to a value which is different as the majority of values of b3 received from other nodes, do nothing (they are temporarily excluded from adding data to the blockchain);

In step 604, nodes share the processed data block d2 with others, and if the value is the same they declare an agreement on data block d1.

In step 605, the sequence of steps 601-604 is repeated for other blocks for which agreement has to be obtained (preferably, for all nodes, including the nodes excluded in step 603).

Consequently, steps 601-603 provide high level of security, because the calculations performed therein are performed on perfectly random numbers: since b1, b2 originate from a quantum channel, then even if b3 is shared over a classic channel, it is dependent on the perfectly random values b1, b2.

It should be noted here, that only the first step of a protocol requires access to the quantum channel (bits b1 and b2 come from the measurement of a quantum state that is shared between parties). All other steps are performed using classical communication layers.

The use of quantum mechanical laws and mechanisms, such as distribution of the GHZ state using TB CKA protocol, is beneficial for reduction of negative consequences of FLP and CAP theorem. The presented method of obtaining consensus provides all properties of distributed consensus, as discussed in publications "Impossibility of Distributed Consensus with One Faulty Process" by M.J. Fischer, N.A. Lynch, M.S. Paterson (Journal of the ACM 32(2), 374 (1985)) and "A Comparative Study of Blockchain Consensus" by Q. Wang, J. Huang, S. Wang, Y. Chen, P. Zhang, L. He (Algorithms, J. Phys.: Conf. Ser. 1437, 012007 (2020)):
- agreement - provided by quantum mechanics (measurement of any entangled qubit cause all other qubits to collapse into an identical state);
- validity - provided by proposing either 0 or 1 after the measurement done by first node;
- wait-free processing - provided by the entanglement, i.e. the quantum state of all qubits collapses simultaneously.

It is worth to mention that faulty nodes do not influence achievement of the consensus, because the consensus is obtained after any measurements performed by any node. Summarizing, the use of GHZ state enables to achieve the consensus in distributed systems and, what is more, overcome the FLP impossibility result.

## Claims

1. A system for deploying a quantum conference key agreement protocol, comprising:
- a generator (110) configured to generate a first beam (B1) of photons (11-13);
- a time-bin encoder (120) configured to modify the beam of photons (11-13) to obtain early-time-bin photons (21, 23) and late-time-bin photons (22) forming a second beam (B2) of time bin photons; and
- a polarization qubit generator (130) configured to transform the second beam (B2) of time-bin photons (21-23) to time-bin GHZ qubits that represent time-bin GHZ states, wherein time-bin GHZ states of various dimensions are created and shared for influencing the number of nodes that share the same conference key.

2. The system according to claim 1, wherein the time-bin encoder (120) comprises a dual optical path containing beamsplitters (212, 213) and mirrors (214, 215) that provide a short and long path.

3. The system according to any of previous claims, wherein the polarization qubit generator (130) comprises:
- a first spontaneous parametric down-conversion nonlinear crystal (218) configured to form a third beam (B3) of hyperentangled qubits from the second beam (B2) of time bin photons; and
- a first polarization beamsplitter (222) configured to divide the third beam (B3) into a fourth beam (B4) with a first polarization and a fifth beam (B5) with a second polarization orthogonal to the first polarization.

4. The system according to claim 3, further comprising:
- a second spontaneous parametric down-conversion nonlinear crystal (227) configured to form a sixth beam (B6) from the fourth beam (B4) and a seventh beam (B7) from the fifth beam (B5) wherein the fourth beam (B4) is passed through the spontaneous parametric down-conversion nonlinear crystal (227) in an opposite direction with respect to the fifth beam (B5);
- a second polarization beamsplitter (232) configured to divide the sixth beam (B6) into an eighth beam (B8) with a first polarization and a ninth beam (B9) with a second polarization orthogonal to the first polarization; and
- a third polarization beamsplitter (223) configured to divide the seventh beam (B7) into a tenth beam (B10) with a first polarization and an eleventh beam (B11) with a second polarization orthogonal to the first polarization.

5. A method for deploying a quantum conference key agreement protocol, comprising generating at least two beams of time-bin GHZ qubits (B4-B5; B8-B11) by means of the system according to any of previous claims and receiving the beams (B4-B5; B8-B11) by corresponding detectors (224, 231, 233, 234).

## Patentansprüche

1. System zum Einsatz eines Quanten-Konferenzschlüsselvereinbarungsprotokolls, umfassend:
- einen Generator (110), der dazu ausgebildet ist, einen ersten Strahl (B1) von Photonen (11-13) zu erzeugen;
- einen Zeit-Bin-Kodierer (120), der dazu ausgebildet ist, den Photonenstrahl (11-13) so zu verändern, dass Photonen des frühen Zeit-Bins (21, 23) und Photonen des späten Zeit-Bins (22) erhalten werden, die einen zweiten Strahl (B2) von Zeit-Bin-Photonen bilden; und
- einen Polarisations-Qubit-Generator (130), der dazu ausgebildet ist, den zweiten Strahl (B2) von Zeit-Bin-Photonen (21-23) in Zeit-Bin-GHZ-Qubits umzuwandeln, die Zeit-Bin-GHZ-Zustände darstellen, wobei Zeit-Bin-GHZ-Zustände verschiedener Dimensionen erzeugt und gemeinsam genutzt werden, um die Anzahl der Knoten zu beeinflussen, die denselben Konferenzschlüssel gemeinsam nutzen.

2. System nach Anspruch 1, wobei der Zeit-Bin-Kodierer (120) einen doppelten optischen Pfad umfasst, der Strahlteiler (212, 213) und Spiegel (214, 215) enthält, die einen kurzen und einen langen Pfad bereitstellen.

3. System nach einem der vorhergehenden Ansprüche, wobei der Polarisations-Qubit-Generator (130) umfasst:
- einen ersten nichtlinearen Kristall (218) zur spontanen parametrischen Abwärtskonversion, der dazu ausgebildet ist, aus dem zweiten Strahl (B2) von Zeit-Bin-Photonen einen dritten Strahl (B3) von hyperverschränkten Qubits zu bilden; und
- einen ersten Polarisationsstrahlteiler (222), der dazu ausgebildet ist, den dritten Strahl (B3) in einen vierten Strahl (B4) mit einer ersten Polarisation und einen fünften Strahl (B5) mit einer zweiten Polarisation, die orthogonal zur ersten Polarisation ist, aufzuteilen.

4. System nach Anspruch 3, weiterhin umfassend:
- einen zweiten nichtlinearen Kristall (227) zur spontanen parametrischen Abwärtskonversion, der dazu ausgebildet ist, aus dem vierten Strahl (B4) einen sechsten Strahl (B6) und aus dem fünften Strahl (B5) einen siebten Strahl (B7) zu bilden, wobei der vierte Strahl (B4) in einer zum fünften Strahl (B5) entgegengesetzten Richtung durch den nichtlinearen Kristall (227) zur spontanen parametrischen Abwärtskonversion geleitet wird;
- einen zweiten Polarisationsstrahlteiler (232), der dazu ausgebildet ist, den sechsten Strahl (B6) in einen achten Strahl (B8) mit einer ersten Polarisation und einen neunten Strahl (B9) mit einer zweiten Polarisation, die orthogonal zur ersten Polarisation ist, aufzuteilen; und
- einen dritten Polarisationsstrahlteiler (223), der dazu ausgebildet ist, den siebten Strahl (B7) in einen zehnten Strahl (B10) mit einer ersten Polarisation und einen elften Strahl (B11) mit einer zweiten Polarisation, die orthogonal zur ersten Polarisation ist, aufzuteilen.

5. Verfahren zum Einsatz eines Quanten-Konferenzschlüsselvereinbarungsprotokolls, umfassend das Erzeugen von mindestens zwei Strahlen von Zeit-Bin-GHZ-Qubits (B4-B5; B8-B11) mittels des Systems nach einem der vorhergehenden Ansprüche und das Empfangen der Strahlen (B4-B5; B8-B11) durch entsprechende Detektoren (224, 231, 233, 234).

## Revendications

1. Système pour la mise en œuvre d'un protocole quantique d'établissement de clé de conférence, comprenant :
- un générateur (110) configuré pour générer un premier faisceau (B1) de photons (11-13) ;
- un codeur en créneaux temporels (120) configuré pour modifier le faisceau de photons (11-13) afin d'obtenir des photons de créneau temporel précoce (21, 23) et des photons de créneau temporel tardif (22), formant un deuxième faisceau (B2) de photons en créneaux temporels ; et
- un générateur de qubits de polarisation (130) configuré pour transformer le deuxième faisceau (B2) de photons en créneaux temporels (21-23) en qubits GHZ en créneaux temporels représentant des états GHZ en créneaux temporels, des états GHZ en créneaux temporels de différentes dimensions étant créés et partagés afin d'influer sur le nombre de nœuds partageant la même clé de conférence.

2. Système selon la revendication 1, dans lequel le codeur en créneaux temporels (120) comprend un double trajet optique contenant des séparateurs de faisceau (212, 213) et des miroirs (214, 215) qui définissent un trajet court et un trajet long.

3. Système selon l'une quelconque des revendications précédentes, dans lequel le générateur de qubits de polarisation (130) comprend :
- un premier cristal non linéaire de conversion paramétrique descendante spontanée (218) configuré pour former un troisième faisceau (B3) de qubits hyperintriqués à partir du deuxième faisceau (B2) de photons en créneaux temporels ; et
- un premier séparateur de faisceau polarisant (222) configuré pour diviser le troisième faisceau (B3) en un quatrième faisceau (B4) présentant une première polarisation et un cinquième faisceau (B5) présentant une seconde polarisation orthogonale à la première polarisation.

4. Système selon la revendication 3, comprenant en outre :
- un second cristal non linéaire de conversion paramétrique descendante spontanée (227) configuré pour former un sixième faisceau (B6) à partir du quatrième faisceau (B4) et un septième faisceau (B7) à partir du cinquième faisceau (B5), le quatrième faisceau (B4) étant amené à traverser le cristal non linéaire de conversion paramétrique descendante spontanée (227) dans une direction opposée à celle du cinquième faisceau (B5) ;
- un deuxième séparateur de faisceau polarisant (232) configuré pour diviser le sixième faisceau (B6) en un huitième faisceau (B8) présentant une première polarisation et un neuvième faisceau (B9) présentant une seconde polarisation orthogonale à la première polarisation ; et
- un troisième séparateur de faisceau polarisant (223) configuré pour diviser le septième faisceau (B7) en un dixième faisceau (B10) présentant une première polarisation et un onzième faisceau (B11) présentant une seconde polarisation orthogonale à la première polarisation.

5. Procédé de mise en œuvre d'un protocole quantique d'établissement de clé de conférence, comprenant la génération d'au moins deux faisceaux de qubits GHZ en créneaux temporels (B4-B5 ; B8-B11) au moyen du système selon l'une quelconque des revendications précédentes, et la réception desdits faisceaux (B4-B5 ; B8-B11) par des détecteurs correspondants (224, 231, 233, 234).
